(19) Europäisches Patentamt
European Patent Office
Office européen des brevets

(11) Publication number: 0 257 469 A1

# (12) EUROPEAN PATENT APPLICATION

(21) Application number: 87111750.3

(22) Date of filing: 13.08.87

(51) Int. Cl.⁴: C 08 G 73/16

(30) Priority: 22.08.86 US 899374

(43) Date of publication of application: 02.03.88 Bulletin 88/9

(84) Designated Contracting States: DE FR GB IT NL

(71) Applicant: GENERAL ELECTRIC COMPANY, 1 River Road, Schenectady New York 12305 (US)

(72) Inventor: Evans, Thomas Lane, 3 Earl Court, Clifton Park New York 12065 (US)

(74) Representative: Catherine, Alain, General Electric France Service de Propriété Industrielle 18 Rue Horace Vernet B.P. 76, F-92134 Issy-les-Moulineaux Cedex (FR)

## (54) Block copolyimidecarbonates and method for their preparation.

(57) Biscopolyimidecarbonates are prepared by the reaction of a salt of a polyimide bisphenol, particularly a polyetherimide bisphenol, with at least one cyclic polycarbonate oligomer, preferably an oligomer mixture. They are useful as engineering thermoplastic resins, combining the properties of polycarbonates and polyimides in various proportions.

EP 0 257 469 A1

# BLOCK COPOLYIMIDECARBONATES AND METHOD FOR THEIR PREPARATION

This invention relates to novel copolycarbonates and methods for their preparation. More particularly, it relates to block copolyimidecarbonates.

Copolycarbonates are in wide use as engineering thermoplastic resins, by reason of such beneficial properties as transparency, toughness, flexibility, high tensile and impact strength over a wide temperature range, and dimensional stability. Various block copolymers containing polycarbonate moieties are known in the art, being described in numerous U.S. patents. Such copolymers are frequently useful by reason of the combination therein of advantageous properties of the polycarbonate moieties and the moieties of the other block or blocks.

Polyimides, particularly polyetherimides, are also of value as engineering thermoplastics because of their high temperature stability, flame retardancy, dielectric properties, strength, processability and chemical resistance. It would be of interest to combine the properties of these polyimides and polycarbonates.

Accordingly, the present invention provides novel block copolyimidecarbonates and a method for their preparation, said copolyimidecarbonates being useful as engineering thermoplastics.

In one of its aspects, the present invention includes block copolyimidecarbonate compositions comprising structural units having the formula

(I) 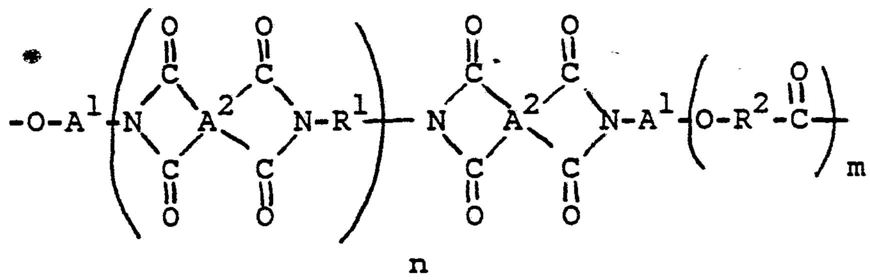 ,

wherein:

$A^1$ is a divalent aromatic radical;

$A^2$ is a tetravalent aromatic radical;

$R^1$ is an aromatic hydrocarbon radical containing about 6-20 carbon atoms, an alkylene or cycloalkylene radical containing about 2-20 carbon atoms, or a bis-alkylenepoly(dialkylsiloxane) radical;

at least about 60% of the total number of $R^2$ values are divalent aromatic organic radicals, the balance thereof being divalent aliphatic, alicyclic or aromatic organic radicals;

m is in the range of about 10-500; and

n is from 1 to about 100.

The $A^1$ values in the copolyimidecarbonates of this invention are divalent aromatic radicals, preferably hydrocarbon and substituted hydrocarbon radicals as illustrated by p-phenylene, m-phenylene, p-tolylene and chloro-, nitro- and acyl-substituted derivatives thereof. The aromatic hydrocarbon radicals, especially p-phenylene and m-phenylene, are preferred.

The $A^2$ values may be tetravalent aromatic hydrocarbon radicals or radicals containing non-hydrocarbon substituents and/or hetero atoms such as oxygen, nitrogen, sulfur, phosphorus and silicon. Most often, $A^2$ contains a plurality of aromatic moieties separated by bridging groups

such as alkylene, oxy, sulfone, carbonyl, phenylene and combinations thereof.

The preferred $A^2$ radicals are those having the formula

(II) 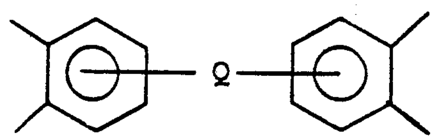 ,

wherein Q is a single bond or a divalent bridging group. The identity of the bridging group is immaterial so long as it does not substantially alter the character or reactivity of the $A^2$ moiety. Illustrative bridging groups are $-CH_2-$, $-C_2H_4-$, $-C(CH_3)_2-$, $-C(CF_3)_2-$, $-O-$, $-\overset{\overset{O}{\|}}{C}-$, $-S_x-$, $-SO_2-$, $-OR^3-O-$, $-S-R^3-S-$ and $-SO_2R^3-SO_2-$, wherein x is 1 or 2 and $R^3$ is a divalent aliphatic or aromatic radical, particularly a hydrocarbon radical.

The preferred bridging group is $-O-R^3-O-$, wherein $R^3$ is aromatic. Illustrative $R^3$ values are those having the formulas

(III) 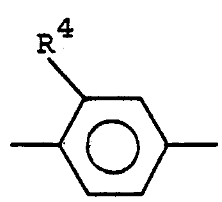 ,

(IV) 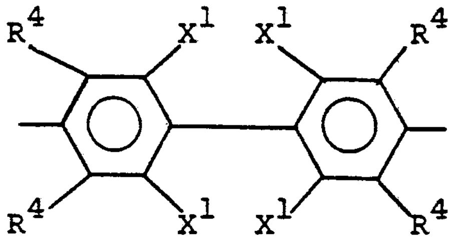 and

(V) 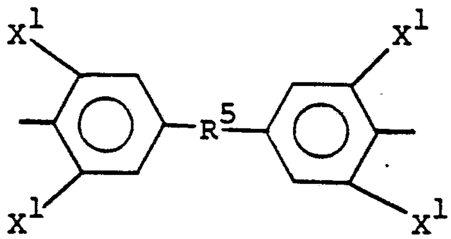 ,

wherein each $R^4$ is independently hydrogen or methyl; $R^5$ is a straight chain or branched alkylene radical containing 1-5 carbon atoms, -O-, -S-, $-SO_2-$, $-\overset{\overset{O}{\|}}{C}-$ or $-C(CF_3)_2-$ and is most often the isopropylidene radical; and each $X^1$ is independently hydrogen or halogen (usually chlorine or bromine). Mixtures of the foregoing formulas are also contemplated. Especially preferred is the radical derived from bisphenol A [i.e., 2,2'-bis(4-hydroxyphenyl)-propane] by the removal of both hydroxy groups therefrom and having formula V wherein $R^5$ is isopropylidene and each $X^1$ is hydrogen.

The $R^1$ value is as previously defined and may be considered as being derived from a diamine of the formula

(VI) $$H_2N-R^1-NH_2$$ .

Examples of suitable $R^1$ values are those in such diamines as ethylenediamine, propylenediamine, trimethylenediamine,

diethylenetriamine, triethylenetetramine, heptamethylenediamine, octamethylenediamine, 2,11-dodecanediamine, 1,12-octadecanediamine, 3-methylheptamethylenediamine, 4,4-dimethylheptamethylenediamine, 4-methylnonamethylenediamine, 2,5-dimethylhexamethylenediamine, 2,2-dimethylpropylenediamine, N-methyl-bis(3-aminopropyl)amine, 3-methoxyhexamethylenediamine, 1,2-bis(3-aminopropoxy)ethane, bis(3-aminopropyl)sulfide, 1,4-cyclohexanediamine, bis-(4-aminocyclohexyl)methane, m-phenylenediamine, p-phenylenediamine, 2,4-diaminotoluene, 2,6-diaminotoluene, m-xylylenediamine, p-xylylenediamine, benzidine, 3,3'-dimethylbenzidine, 3,3'-dimethoxybenzidine, 1,5-diaminonaphthalene, bis(4-aminophenyl)methane, bis(4-aminophenyl)propane, 2,4-bis-(β-amino-t-butyl)toluene, bis(p-β-methyl-o-aminopentyl)-benzene, 1,3-diamino-4-isopropylbenzene, bis(4-aminophenyl) sulfone, bis(4-aminophenyl) ether and 1,3-bis(3-aminopropyl)tetramethyldisiloxane. Mixtures of these $R^1$ values may also be present. Preferably, $R^1$ is an aromatic hydrocarbon radical; the m-phenylene and bis(4-phenylene)methane radicals are particularly preferred.

The $R^2$ values are also defined hereinabove. Preferably, at least about 80% of the total number of said values, and most desirably all, are aromatic. The aromatic $R^2$ radicals preferably have the formula

$$\text{(VII)} \qquad -A^3-Y^1-A^4- \quad ,$$

wherein each of $A^3$ and $A^4$ is a monocyclic divalent aromatic radical and $Y^1$ is a bridging radical in which one or two atoms separate $A^3$ from $A^4$. The free valence bonds in formula III are usually in the meta or para positions of $A^3$ and $A^4$ in relation to $Y^1$.

In formula VII, the $A^3$ and $A^4$ values may be unsubstituted phenylene or substituted derivatives thereof, illustrative substituents (one or more) being alkyl, alkenyl, halo (especially chloro and/or bromo), nitro, alkoxy and the like. Unsubstituted phenylene radicals are preferred. Both $A^3$ and $A^4$ are preferably p-phenylene, although both may be o- or m-phenylene or one o- or m-phenylene and the other p-phenylene.

The bridging radical, $Y^1$, is one in which one or two atoms, preferably one, separate $A^3$ from $A^4$. It is most often a hydrocarbon radical and particularly a saturated radical such as methylene, cyclohexylmethylene, 2-[2.2.1]-bicycloheptylmethylene, ethylene, isopropylidene, neopentylidene, cyclohexylidene, cyclopentadecylidene, cyclododecylidene or adamantylidene, especially a gem-alkylene (alkylidene) radical. Also included, however, are unsaturated radicals and radicals which contain atoms other than carbon and hydrogen; for example, 2,2-dichloroethylidene, carbonyl, phthalidylidene, oxy, thio, sulfoxy and sulfone.

The $R^2$ values may be considered as being derived from dihydroxy compounds of the formula $HO-R^2-OH$, especially dihydroxyaromatic compounds and preferably bisphenols of the formula $HO-A^3-Y^1-A^4-OH$. The following dihydroxy compounds are illustrative:

Ethylene glycol
Propylene glycol
1,3-Propanediol
1,4-Butanediol
1,6-Hexanediol
1,12-Dodecanediol
2-Ethyl-1,10-decanediol
2-Butene-1,4-diol
1,3-Cyclopentanediol

1,3-Cyclohexanediol
1,4-Cyclohexanediol
1,4-Bis(hydroxymethyl)benzene (which is a vinylog of ethylene glycol and has similar properties)
Resorcinol
4-Bromoresorcinol
Hydroquinone
4,4'-Dihydroxybiphenyl
1,6-Dihydroxynaphthalene
2,6-Dihydroxynaphthalene
Bis(4-hydroxyphenyl)methane
Bis(4-hydroxyphenyl)diphenylmethane
Bis(4-hydroxyphenyl)-1-naphthylmethane
1,1-Bis(4-hydroxyphenyl)ethane
1,2-Bis(4-hydroxyphenyl)ethane
1,1-Bis(4-hydroxyphenyl)-1-phenylethane
2,2-Bis(4-hydroxyphenyl)propane ("bisphenol A")
2-(4-Hydroxyphenyl)-2-(3-hydroxyphenyl) propane
2,2-Bis(4-hydroxyphenyl)butane
1,1-Bis(4-hydroxyphenyl)isobutane
1,1-Bis(4-hydroxyphenyl)cyclohexane
1,1-Bis(4-hydroxyphenyl)cyclododecane
Trans-2,3-bis(4-hydroxyphenyl)-2-butene
2,2-Bis(4-hydroxyphenyl)adamantane
α,α'-Bis(4-hydroxyphenyl)toluene
Bis(4-hydroxyphenyl)acetonitrile
2,2-Bis(3-methyl-4-hydroxyphenyl)propane
2,2-Bis(3-ethyl-4-hydroxyphenyl)propane
2,2-Bis(3-n-propyl-4-hydroxyphenyl)propane
2,2-Bis(3-isopropyl-4-hydroxyphenyl)propane

2,2-Bis(3-sec-butyl-4-hydroxyphenyl)propane
2,2-Bis(3-t-butyl-4-hydroxyphenyl)propane
2,2-Bis(3-cyclohexyl-4-hydroxyphenyl)propane
2,2-Bis(3-allyl-4-hydroxyphenyl)propane
2,2-Bis(3-methoxy-4-hydroxyphenyl)propane
2,2-Bis(3,5-dimethyl-4-hydroxyphenyl)propane
2,2-Bis(2,3,5,6-tetramethyl-4-hydroxyphenyl)-propane
2,2-Bis(3-5-dichloro-4-hydroxyphenyl)propane
2,2-Bis(3,5-dibromo-4-hydroxyphenyl)propane
2,2-Bis(2,6-dibromo-3,5-dimethyl-4-hydroxyphenyl)propane
α,α-Bis(4-hydroxyphenyl)toluene
α,α,α',α'-Tetramethyl-α,α'-bis(4-hydroxyphenyl)-p-xylene
2,2-Bis(4-hydroxyphenyl)hexafluoropropane
1,1-Dichloro-2,2-bis(4-hydroxyphenyl)ethylene
1,1-Dibromo-2,2-bis(4-hydroxyphenyl)ethylene
1,1-Dichloro-2,2-bis(5-phenoxy-4-hydroxyphenyl)ethylene
4,4'-Dihydroxybenzophenone
3,3-Bis(4-hydroxyphenyl)-2-butanone
1,6-Bis(4-hydroxyphenyl)-1,6-hexanedione
Bis(4-hydroxyphenyl) ether
Bis(4-hydroxyphenyl) sulfide
Bis(4-hydroxyphenyl) sulfoxide
Bis(4-hydroxyphenyl) sulfone
Bis(3,5-dimethyl-4-hydroxyphenyl) sulfone
9,9-Bis(4-hydroxyphenyl)fluorene
2,7-Dihydroxypyrene
6,6'-Dihydroxy-3,3,3',3'-tetramethylspiro(bis)indane ("spirobiindane bisphenol")
3,3-Bis(4-hydroxyphenyl)phthalide

2,6-Dihydroxydibenzo-p-dioxin
2,6-Dihydroxythianthrene
2,7-Dihydroxyphenoxathiin
2,7-Dihydroxy-9,10-dimethylphenazine
3,6-Dihydroxydibenzofuran
3,6-Dihydroxydibenzothiophene
2,7-Dihydroxycarbazole.

Bisphenol A is often preferred for reasons of availability and particular suitability for the purposes of the invention.

The value of m is, of course, directly related to the molecular weight of the polycarbonate portion of the block copolyimidecarbonate. It will usually be at least about 20 and is preferably about 75-300. Similarly, the value of n will depend on the molecular weight of the polyimide portion and will usually be up to about 25.

The block copolyimidecarbonates of this invention may be prepared by reacting a salt of a polyimide bisphenol of the formula

(VIII) 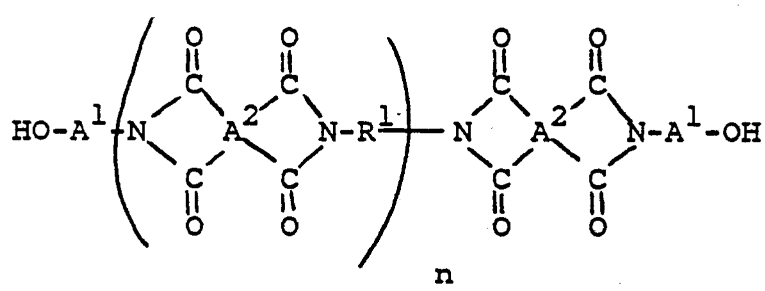

with at least one cyclic polycarbonate oligomer comprising structural units of the formula

(IX) $$-O-R^2-O-\overset{O}{\overset{\|}{C}}-$$ ,

wherein $A^{1-2}$, $R^{1-2}$ and n are as previously defined. This method of preparation is another aspect of the invention.

Polyimide bisphenols of formula VIII include the polyetherimide bisphenols disclosed and claimed in copending, commonly owned application Serial No. [RD-17167], and may be prepared as described therein. In brief, the methods of preparation include the reactions of dianhydrides and certain bisimides with mixtures of aminophenols and diamines. Such methods involving dianhydrides are disclosed in a large number of United States patents and other literature references. Methods involving certain bisimides are disclosed, for example, in U.S. Patent 4,578,470, the disclosure of which is incorporated by reference herein.

The dianhydrides and bisimides may be represented by the formula

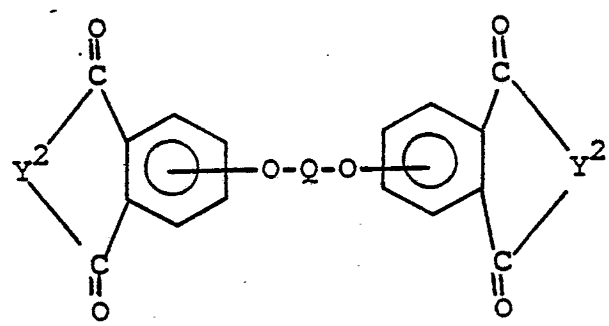

,

wherein $Y^2$ is oxygen or N-Z and Z is a highly electron-deficient group. Similarly, the aminophenols may be represented by the formula $HO-A^1-NH_2$.

The reaction leading to the polyimide bisphenols, involving the above-described dianhydrides or bisimides, aminophenols and diamines, may be conducted under conventional conditions, using appropriate mole ratios of reagents and conventional reaction media. Such reactions are illustrated by the following example.

salts, are preferred. The latter are particularly suitable by reason of the high nucleophilicity of iminotriaminophosphoranes, which can delocalize a positive charge among a phosphorus atom and four adjacent nitrogen atoms. Suitable strong bases include polar compounds such as sodamide and sodium hydride, and non-polar compounds such as pentamethylguanidine and 2-t-butylimino-2-diethylamino-1,3-dimethylperhydro-1,3,2-diazaphosphorine. The latter compound is disclosed in Schwesinger, Chimia, 39, 269-272 (1985).

The cyclic polycarbonate oligomers include dimers, trimers and tetramers of the type disclosed in the following U.S. patents:

| | |
|---|---|
| 3,155,683 | 3,386,954 |
| 3,274,214 | 3,422,119. |

Also included are cyclic polycarbonate oligomer mixtures of the type disclosed in European patent application 162,379 and in copending, commonly owned application Serial No. 871,641, filed June 6, 1986, the disclosures of which are incorporated by reference herein.

Such cyclic oligomer mixtures consist essentially of oligomers having degrees of polymerization from 2 to about 30 and preferably to about 20, with a major proportion being up to about 12 and a still larger proportion up to about 15. Since they are mixtures of oligomers having varying degrees of polymerization, these compositions have relatively low melting points as compared to single compounds such as the corresponding cyclic trimer. The cyclic oligomer mixtures are generally liquid at temperatures above 300°C and most often at temperatures above 225°C.

The cyclic oligomer mixtures contain very low proportions of linear oligomers. In general, no more than

Example 1

A solution of 261.22 grams (504 mmol.) of bisphenol A dianhydride in 600 ml. of o-dichlorobenzene was heated to 190°C. There was then added, with stirring, a mixture of 50.86 grams (471 mmol.) of m-phenylenediamine, 6.83 grams (63 mmol.) of p-aminophenol and 60 mg. of sodium phenylphosphonate. Heating and stirring were continued at 190-200°C as water of reaction of removed by azeotropic distillation, and then for an additional 3 hours; the mixture was then cooled to room temperature. Methylene chloride, 400 ml., was added and the product was precipitated by pouring into methanol, filtered and dried in vacuum at 160°C. There was obtained the desired polyetherimide bisphenol having a weight average molecular weight, as determined by gel permeation chromatography, of about 17,800, corresponding to a polymer of the formula

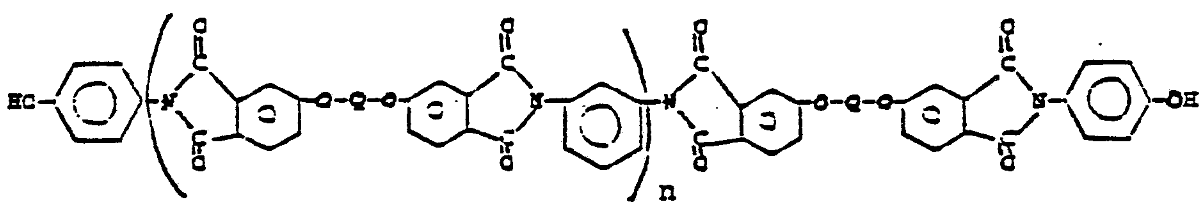

wherein Q is derived from bisphenol A and n is about 12.

For the purposes of this invention, the polyimide bisphenol salts must be obtained substantially anhydrous, since water will react adversely with cyclic polycarbonate oligomers. Said salts may be prepared by reacting the polyimide bisphenol with a strong base in a non-aqueous medium, typically in solution in an aprotic polar organic liquid such as dimethylformamide, dimethylacetamide, dimethyl sulfoxide or N-methylpyrrolidone. Alkali metal and amine salts, especially sodium and tetrakis(amino)phosphonium

about 10% by weight, and most often no more than about 5%, of such linear oligomers are present. The mixtures also usually contain low percentages (frequently less than 30% and preferably no higher than about 20%) of polymers (linear or cyclic) having a degree of polymerization greater than about 30. Such polymers are frequently identified hereinafter as "high polymer". These properties, coupled with the relatively low melting points and viscosities of the cyclic oligomer mixtures, contribute to their utility as resin precursors, especially for high molecular weight resins, as described hereinafter.

These mixtures may be prepared by a condensation reaction involving at least one bishaloformate having the formula

$$\text{(X)} \qquad R^2(OCOX^2)_2 \quad ,$$

wherein $R^2$ is as defined hereinabove and $X^2$ is chlorine or bromine. The condensation reaction typically takes place interfacially when a solution of said compound in a substantially non-polar organic liquid is contacted with a tertiary amine from a specific class and an aqueous alkali metal hydroxide solution. Also present may be other compounds, including oligomers of the formula

$$X^2-\overset{O}{\overset{\|}{C}}-O-R^2-O-\overset{O}{\overset{\|}{C}}\left(O-R^2-O-\overset{O}{\overset{\|}{C}}\right)_p X^2 \quad ,$$

wherein p is a small number, typically about 1-4.

While the $X^2$ values in formula X may be chlorine or bromine, the bischloroformates, in which $X^2$ is chlorine, are most readily available and their use is therefore

preferred. Frequent reference to bischloroformates will be made hereinafter, but it should be understood that other bishaloformates may be substituted therefor as appropriate.

The bischloroformate may be employed in substantially pure, isolated form. It is frequently preferred, however, to use a crude bischloroformate product. Suitable crude products may be prepared by any known methods for bischloroformate preparation. Typically, at least one bisphenol is reacted with phosgene in the presence of a substantially inert organic liquid.

In addition to the bisphenol bischloroformate, such crude bischloroformate products may contain oligomer bischloroformates. Most often, a major proportion of the crude product comprises monomer, dimer and trimer bischloroformate. Higher oligomer bischloroformates, and monochloroformates corresponding to any of the aforementioned bischloroformates, may also be present, preferably only in trace amounts.

The tertiary amines useful for cyclic oligomer preparation ("tertiary" in this context denoting the absence of N-H bonds) generally comprise those which are oleophilic (i.e., which are soluble in and highly active in organic media, especially those used in the oligomer preparation method of this invention), and more particularly those which are useful for the formation of polycarbonates. Reference is made, for example, to the tertiary amines disclosed in U.S. Patents 4,217,438 and 4,368,315, the disclosures of which are incorporated by reference herein. They include aliphatic amines such as triethylamine, tri-n-propylamine, diethyl-n-propylamine and tri-n-butylamine and highly nucleophilic heterocyclic amines such as 4-dimethylaminopyridine (which, for the purposes of this invention, contains only one active amine group). The preferred amines

are those which dissolve preferentially in the organic phase of the reaction system; that is, for which the organic-aqueous partition coefficient is greater than 1. This is true because intimate contact between the amine and bischloroformate is essential for the formation of the cyclic oligomer mixture. For the most part, such amines contain at least about 6 and preferably about 6-14 carbon atoms.

The most useful amines are trialkylamines containing no branching on the carbon atoms in the 1- and 2-positions. Especially preferred are tri-n-alkylamines in which the alkyl groups contain up to about 4 carbon atoms. Triethylamine is most preferred by reason of its particular availability, low cost, and effectiveness in the preparation of products containing low percentages of linear oligomers and high polymers.

Suitable aqueous alkali or alkaline earth metal hydroxide or carbonate solutions (hereinafter sometimes designated "metal base") include lithium, sodium, potassium or calcium hydroxide or sodium or potassium carbonate. Sodium hydroxide is preferred because of its availability and relatively low cost. The concentration of the solution is not critical and may be about 0.2-16 M.

The fourth essential component in the cyclic oligomer preparation method is a substantially non-polar organic liquid which forms a two-phase system with water. The identity of the liquid is not critical, provided it possesses the stated properties. Illustrative liquids are aromatic hydrocarbons such as toluene and xylene; substituted aromatic hydrocarbons such as chlorobenzene, o-dichlorobenzene and nitrobenzene; chlorinated aliphatic hydrocarbons such as chloroform and methylene chloride; and mixtures of the foregoing with ethers such as tetrahydrofuran. Methylene chloride is generally preferred.

To prepare the cyclic oligomer, the reagents and components are maintained in contact under conditions whereby the bischloroformate is present in low concentration. Actual high dilution conditions, requiring a large proportion of organic liquid, may be employed but are usually not preferred for cost and convenience reasons. Instead, simulated high dilution conditions known to those skilled in the art may be employed. For example, in one embodiment of the method the bischloroformate, and optionally other reagents, are added gradually to a reaction vessel containing solvent.

The reaction temperature is generally in the range of about 0-50°C. It is most often about 0-40°C and preferably 20-40°C.

For maximization of the yield and purity of cyclic oligomers as opposed to high polymer and insoluble and/or intractable by-products, it is preferred to use not more than about 1.5 mole of bischloroformate per liter of organic liquid in the reaction system, including any liquid used to dissolve bischloroformate. Preferably, about 0.003-1.0 mole of bischloroformate is used.

The molar proportions of the reagents constitute another important feature for yield and purity maximization. The preferred molar ratio of amine to bischloroformate used alone (calculated as bisphenol bischloroformate) is about 0.1-1.0:1 and most often about 0.15-0.6:1, and that of metal base to bischloroformate is about 1.5-3:1 and most often about 2-3:1.

Separation of the oligomer mixture from at least a portion of the high polymer and insoluble material present is sometimes necessary or desirable. When other reagents are added to the metal base and the preferred conditions and material proportions are otherwise employed, the cyclic

oligomer mixture (obtained as a solution in the organic liquid) typically contains less than 30% by weight and frequently less than about 20% of high polymer and insoluble material. When all of the preferred conditions described hereinafter are employed, the product may contain 10% or even less of such material. Depending on the intended use of the cyclic oligomer mixture, the separation step may then be unnecessary.

When such removal is necessary, it may be achieved by conventional operations such as combining the crude product, as a solid or in solution, with a non-solvent for said impurities. Illustrative non-solvents include ketones such as acetone and methyl isobutyl ketone and esters such as methyl acetate and ethyl acetate. Acetone is a particularly preferred non-solvent.

Recovery of the cyclic oligomers normally means merely separating the same from diluent (by known methods such as vacuum evaporation) and, optionally, from high polymer and other impurities. As previously suggested, the degree of sophistication of recovery will depend on such variables as the intended end use of the product.

The cyclic bisphenol A polycarbonate oligomer mixtures have been shown to contain oligomers having degrees of polymerization from 2 to 12, including substantially all of those from 2 to 6, with about 50-70% (by weight) thereof being in the range from 2 to 5. It is generally preferred to use said mixtures as prepared, or optionally with separation of high polymer and/or insolubles.

The preparation of cyclic oligomer mixtures is illustrated by the following examples. All parts and percentages in the examples herein are by weight unless otherwise indicated. Temperatures are in degrees Celsius. Molecular weights are weight average unless otherwise

indicated and were determined by gel permeation chromatography relative to polystyrene.

Examples 2-19

Bisphenol A bischloroformate was reacted with aqueous sodium hydroxide and triethylamine in an organic liquid (chloroform in Example 8, methylene chloride in all other examples) according to the following procedure: The bischloroformate was dissolved in half the amount of organic liquid employed and was added gradually, with slow stirring, to the balance of the reaction mixture. In Examples 2-11 and 13, the triethylamine was all originally present in the reaction vessel; in Examples 15-17, it was added gradually at the same time as the bischloroformates; and in Examples 12, 14, 18 and 19, it was added in equal increments at the beginning of bischloroformate addition and at intervals of 20% during said addition. The amount of sodium hydroxide used was 2.4 moles per mole of bischloroformate. After all the bischloroformate had been added, the mixture was stirred for about 2 minutes and the reaction was quenched by the addition of a slight excess of 1 M aqueous hydrochloric acid. The solution in the organic liquid was washed twice with dilute aqueous hydrochloric acid, dried by filtration through phase separation paper and evaporated under vacuum. The residue was dissolved in tetrahydrofuran and high polymer was precipitated by addition of acetone.

The reaction conditions for Examples 2-19 are listed in Table I together with the approximate percentage (by weight) of cyclic polycarbonate oligomer present in the product before high polymer precipitation. The weight average molecular weights of the cyclic oligomer mixtures were

approximately 1300, corresponding to an average degree of polymerization of about 5.1.

TABLE I

| Example | Bischloroformate amt., mmole/l. org. liquid | Bischloroformate amt., total mmol. | NaOH molarity | Molar ratio, amine: bis-chloroformate | Temperature | Addition time, min. | % oligomer in product |
|---|---|---|---|---|---|---|---|
| 2 | 100 | 2 | 0.313 | 0.5 | 20 | 30 | 97 |
| 3 | 100 | 2 | 0.625 | 0.5 | 20 | 30 | 95 |
| 4 | 100 | 2 | 2.5 | 0.5 | 35 | 55 | 93 |
| 5 | 100 | 2 | 2.5 | 0.5 | 0 | 30 | 77 |
| 6 | 100 | 2 | 2.5 | 0.5 | 20 | 30 | 87 |
| 7 | 100 | 2 | 2.5 | 0.5 | 35 | 30 | 78 |
| 8 | 100 | 2 | 2.5 | 0.5 | 50 | 30 | 88 |
| 9 | 100 | 2 | 2.5 | 0.25 | 20 | 30 | 74 |
| 10 | 100 | 1 | 2.5 | 0.2 | 20 | 15 | 75 |
| 11 | 200 | 4 | 2.5 | 0.5 | 20 | 30 | 88 |
| 12 | 500 | 10 | 2.5 | 0.25 | 25 | 105 | 83 |
| 13 | 500 | 10 | 2.5 | 0.25 | 25 | 105 | 78 |
| 14 | 500 | 10 | 2.5 | 0.25 | 25 | 105 | 83 |
| 15 | 500 | 10 | 2.5 | 0.25 | 25 | 105 | 87 |
| 16 | 500 | 10 | 2.5 | 0.29 | 30 | 90 | 78 |
| 17 | 500 | 10 | 2.5 | 0.25 | 30 | 20 | 75 |
| 18 | 500 | 10 | 2.5 | 0.25 | 40-45 | 105 | 79 |
| 19 | 500 | 10 | 2.5 | 0.4 | 25 | 105 | 79 |

Example 20

Bisphenol A bischloroformate (2.0 mmol.) was reacted with aqueous sodium hydroxide and 4-dimethylaminopyridine in methylene chloride. The procedure employed was that of Example 2, except that 66.67 mmol. of bisphenol A per liter of methylene chloride was employed, the aqueous sodium hydroxide concentration was 5.0 M and the reaction temperature was about 25°C. The product comprised 85% cyclic oligomer.

Example 21

A crude bisphenol A bischloroformate product was analyzed as follows:

| | |
|---|---|
| Monomer bischloroformate | 58% |
| Dimer bischloroformate | 26% |
| Trimer bischloroformate | 10% |

and had an average degree of polymerization of about 1.5. An amount thereof containing 800 mmol. of monomer and oligomer bischloroformates, calculated as monomer bischloroformate, dissolved in one-half the total amount of methylene chloride used, and 450 ml. of 5 M aqueous sodium hydroxide were added over 37 minutes, with stirring, to a reaction vessel containing the balance of the methylene chloride. The total amount of bischloroformate was 400 mmol. per liter of methylene chloride. Triethylamine, 200 mmol., was added in equal increments at intervals of 25% during bischloroformate addition. The peak reaction temperature was 37°. Upon workup as in Examples 2-19, there

was obtained a product comprising 82% cyclic polycarbonate oligomer.

Example 22

The crude bischloroformate composition used was a bisphenol A bischloroformate composition corresponding roughly to the dimer.

A 300-ml. Morton flask was charged with 128 ml. of methylene chloride, 10 ml. of water, 2 ml. of 4.9 M aqueous sodium hydroxide, 1.16 ml. of triethylamine and 5 ml. of 0.66 M aqueous disodium salt of bisphenol A. The mixture was heated under reflux, with stirring, as 40 ml. of the bischloroformate solution was added over 37 minutes. There were concurrently added an additional 35 ml. of the bisphenol A disodium salt solution over 32 minutes, 10 ml. of sodium hydroxide solution over 30 minutes, and 0.36 ml. of triethylamine in 10 equal increments 3-1/2 minutes apart. Stirring was continued for several minutes, after which the aqueous and organic phases were separated and the aqueous layer was washed with methylene chloride. The combined organic phases were washed once with dilute aqueous sodium hydroxide, twice with aqueous hydrochloric acid, once again with sodium hydroxide and twice with water, and dried over magnesium sulfate. Upon filtration, vacuum stripping and drying in an oven, there was obtained a white solid comprising the desired cyclic oligomer mixture, containing about 89% cyclic oligomers.

To prepare the block copolyimidecarbonates of this invention, the salt of the polyimide bisphenol is contacted with the cyclic polycarbonate oligomer composition in an anhydrous medium, typically in the melt or in solution in the liquid in which said salt was prepared, at a temperature

in the range of about 20-300°C. Reactant ratios are not critical and may be adjusted to provide a product with the desired properties. A weight ratio of bisphenol salt to oligomer mixture in the range of about 0.1-10:1 is typical. The copolymers thus obtained have high solvent resistance and thermal stability, and are useful as engineering plastics in many applications.

The preparation of the copolyimidecarbonates of this invention is illustrated by the following examples.

Example 23

Sodium hydride, 250 mg., was added to a solution in dry dimethylformamide of 2 grams of a polyetherimide bisphenol similar to that of Example 1 and having a weight average molecular weight of about 19,800. The mixture was stirred for 2 hours at room temperature and filtered in a dry box under nitrogen. There was then added 2 grams of a cyclic bisphenol A polycarbonate oligomer mixture similar to that of Example 22. Stirring was continued for 1/2 hour, after which the mixture was poured into methanol containing a small amount of sulfuric acid. The copolyetherimidecarbonate was separated by filtration and dried. It was found to have a weight average molecular weight of 43,200 and two glass transition temperatures, at 148° and 210°C.

Example 24

A polyetherimide bisphenol sodium salt was prepared as in Example 23, precipitated by pouring the dimethylformamide solution into dry ethyl ether, filtered and dried. A mixture of 500 mg. of the sodium salt and 500 mg. of a cyclic bisphenol A polycarbonate oligomer mixture

similar to that of Example 23 was heated at 250°C for 1/2 hour, yielding an opaque methylene chloride-insoluble solid having a melting point of 240°C.

Example 25

A solution of 3 drops of 2-t-butylimino-2-diethylamino-1,3-dimethylperhydro-1,3,2-diazaphosphorine in 20 ml. of 2,4-dichlorotoluene was dried by distillation of 5 ml. thereof. There was then added 1 gram of the polyetherimide bisphenol of Example 23 and the mixture was heated to reflux. The polyetherimide bisphenol dissolved and the salt precipitated as a gelatinous solid. Refluxing was continued for 2 hours, after which one gram of a cyclic bisphenol A polycarbonate oligomer mixture similar to that of Example 23 was added and refluxing was continued for 1/2 hour, during which time the solids dissolved. The solution was precipitated by pouring into methanol which had been acidified by the addition of a few drops of sulfuric acid. The solid which was removed by filtration and dried was the desired block copolyetherimidecarbonate. It had a weight average molecular weight of about 57,700.

The copolyimidecarbonates of this invention have potential for use as engineering thermoplastic resins in various applications. In particular, they may be tailored to provide a combination of the hereinabove-described beneficial properties of polycarbonates and polyimides, especially polyetherimides.

What is claimed is:

1. A block copolyimidecarbonate composition comprising structural units having the formula

(I) 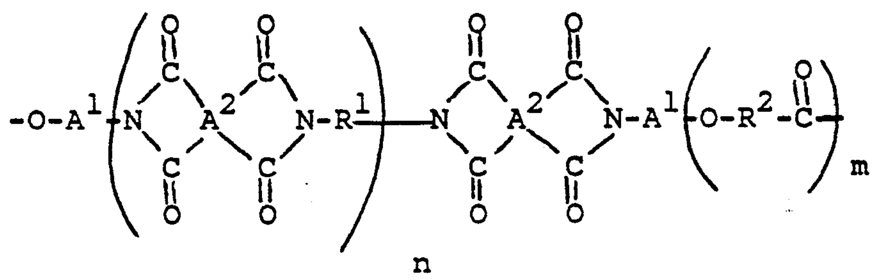 ,

wherein:

$A^1$ is a divalent aromatic radical;

$A^2$ is a tetravalent aromatic radical;

$R^1$ is an aromatic hydrocarbon radical containing about 6-20 carbon atoms, an alkylene or cycloalkylene radical containing about 2-20 carbon atoms, or a bis-alkylenepoly(dialkylsiloxane) radical;

at least about 60% of the total number of $R^2$ values are divalent aromatic organic radicals, the balance thereof being divalent aliphatic, alicyclic or aromatic organic radicals;

m is in the range of about 10-500; and

n is from 1 to about 100.

2. A composition according to claim 1 wherein $A^1$ is an aromatic hydrocarbon radical.

3. A composition according to claim 2 wherein $A^2$ has the formula

(II) 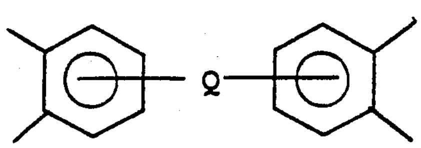 ,

wherein Q is a single bond or a divalent bridging group.

4. A composition according to claim 3 wherein the $R^2$ radicals have the formula

(VII) $-A^3-Y^1-A^4-$ ,

wherein each of $A^3$ and $A^4$ is a monocyclic divalent aromatic radical and $Y^1$ is a bridging radical in which one or two atoms separate $A^3$ from $A^4$.

5. A composition according to claim 4 wherein $R^1$ is an aromatic hydrocarbon radical.

6. A composition according to claim 5 wherein Q is $-O-R^3-O-$, wherein $R^3$ has one of the formulas

(III) 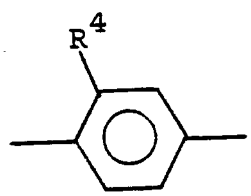 ,

(IV) 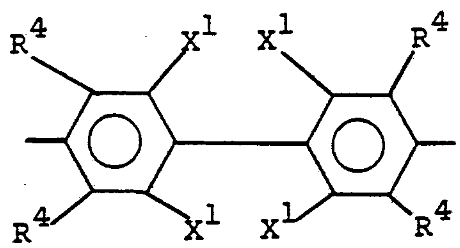 and

(V) 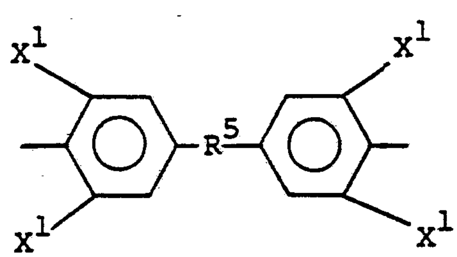 ,

wherein each $R^4$ is independently hydrogen or methyl; $R^5$ is a straight chain or branched alkylene radical containing 1-5 carbon atoms, -O-, -S-, $-SO_2-$, $-\overset{O}{\overset{\|}{C}}-$ or $-C(CF_3)_2-$; and each $X^1$ is independently hydrogen or halogen.

7. A composition according to claim 6 wherein $A^1$ is p-phenylene or m-phenylene.

8. A composition according to claim 7 wherein Q has formula V, $R^5$ is isopropylidene and each $X^1$ is hydrogen.

9. A composition according to claim 8 wherein $R^1$ is m-phenylene or bis(4-phenylene)methane.

10. A composition according to claim 9 wherein $A^3$ and $A^4$ are each p-phenylene and $Y^1$ is isopropylidene.

11. A method for preparing a composition according to claim 1 which comprises reacting a salt of a polyimide bisphenol of the formula

(VIII) 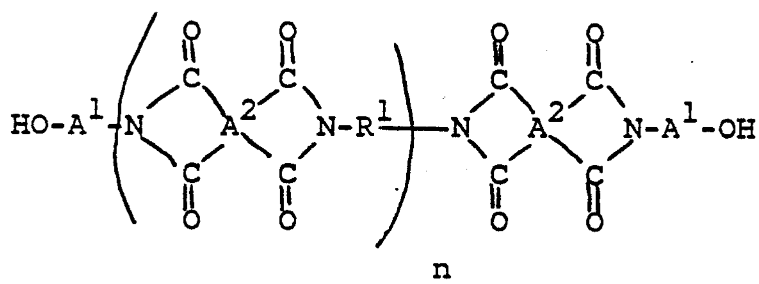

with at least one cyclic polycarbonate oligomer comprising structural units of the formula

(IX) $$-O-R^2-O-\overset{O}{\overset{\|}{C}}-$$ .

12. A method according to claim 11 wherein $A^1$ is an aromatic hydrocarbon radical and $A^2$ has the formula

(II) 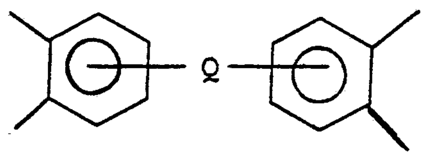 ,

wherein Q is a single bond or a divalent bridging group.

13. A method according to claim 12 wherein a mixture of cyclic polycarbonate oligomers having varying degrees of polymerization is used, and wherein the salt is a sodium or tetrakis(amino)phosphonium salt.

14. A method according to claim 13 wherein the $R^2$ radicals have the formula

(VII) $$-A^3-Y^1-A^4-$$ ,

wherein each of $A^3$ and $A^4$ is a monocyclic divalent aromatic radical and $Y^1$ is a bridging radical in which one or two atoms separate $A^3$ from $A^4$.

15. A method according to claim 14 wherein $R^1$ is an aromatic hydrocarbon radical.

16. A method according to claim 15 wherein Q is $-O-R^3-O-$, wherein $R^3$ has one of the formulas

(III) 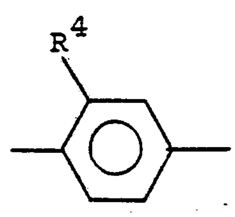 ,

(IV) 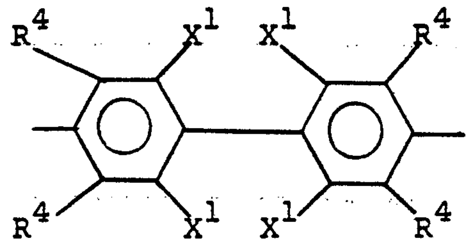 and

(V) 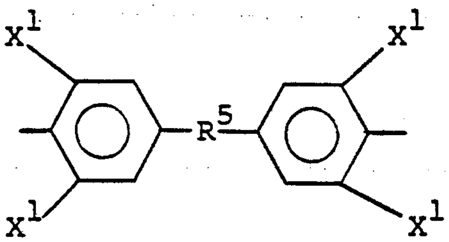 ,

wherein each $R^4$ is independently hydrogen or methyl; $R^5$ is a straight chain or branched alkylene radical containing 1-5 carbon atoms, -O-, -S-, $-SO_2-$, $-\overset{O}{\overset{\|}{C}}-$ or $-C(CF_3)_2-$; and each $X^1$ is independently hydrogen or halogen.

17. A method according to claim 16 wherein $A^1$ is p-phenylene or m-phenylene.

18. A method according to claim 17 wherein Q has formula V, $R^5$ is isopropylidene and each $X^1$ is hydrogen.

19. A method according to claim 18 wherein $R^1$ is m-phenylene or bis(4-phenylene)methane.

20. A method according to claim 19 wherein $A^3$ and $A^4$ are each p-phenylene and $Y^1$ is isopropylidene.

WHP/tg

0257469

European Patent Office

# EUROPEAN SEARCH REPORT

Application Number

EP 87 11 1750

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | N.T.I.S. TECHNICAL NOTES, no. 7, part H, July 1986, pages 849-850, Springfield, Virginia, US; "Solvent-resistant, thermally stable poly(carbonate-imides)" --- | | C 08 G 73/16 |
| P,A | EP-A-0 217 301 (GENERAL ELECTRIC) ----- | | |

TECHNICAL FIELDS SEARCHED (Int. Cl.4)

C 08 G

The present search report has been drawn up for all claims

| Place of search | Date of completion of the search | Examiner |
|---|---|---|
| THE HAGUE | 30-11-1987 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)